# EUROPEAN PATENT SPECIFICATION

(11) **EP 2 395 139 B1**
(45) Date of publication and mention of the grant of the patent: **31.10.2018**
(21) Application number: 10738411.7
(22) Date of filing: 20.01.2010
(51) Int. Cl.: E04H 15/00, D03D 1/00, D03D 3/00, D03D 15/00

(54) **REINFORCING TAPE, CLOTH PRODUCED BY SEWING SAID REINFORCING TAPE, AND WEB STRUCTURE UTILIZING SAID REINFORCING TAPE**
VERSTÄRKUNGSBAND, MITTELS NÄHEN DES VERSTÄRKUNGSBANDES HERGESTELLTER STOFF UND BAHNSTRUKTUR MIT DIESEM VERSTÄRKUNGSBAND
RUBAN DE RENFORCEMENT, TISSU PRODUIT PAR COUTURE DUDIT RUBAN DE RENFORCEMENT, ET STRUCTURE DE BANDE UTILISANT LEDIT RUBAN DE RENFORCEMENT

(30) Priority: 06.02.2009 JP 2009026284; 18.01.2010 JP 2010008351
(43) Date of publication of application: 14.12.2011
(73) Proprietor: finetrack, Chuo-ku, Kobe-shi, Hyogo 6500025 (JP)
(72) Inventor: KANAYAMA,Yotaro, Kobe-shi Hyogo 652-0064 (JP)
(74) Representative: Hannke, Christian
(86) International application number: PCT/JP2010/050632
(87) International publication number: WO 2010/090073

(56) References cited:
- JP-A- 8 260 715
- JP-A- H07 238 266
- JP-A- 2008 057 221
- US-A- 3 669 158
- US-A- 3 756 288
- US-A- 4 405 669

## Description

### Technical Field

The present invention relates to a reinforcing tape for reinforcing the tensile strength of a cloth, a cloth produced by sewing the reinforcing tape, a zelt, a tarp or a tent using the cloth, and a web structure constituted using the reinforcing tape. More particularly, the present invention relates to a lightweight, compact reinforcing tape capable of suppressing elongation of a sewn part and significantly improving a tensile strength of a zelt, a tent, a tarp, or the like.

Tents, zelts, tarps, hammocks, and the like, which are used outdoors, are made by sewing, for example, a nylon or polyester cloth, and the tensile strengths of a zenith part and a ridge line part running to corners (bottoms) mainly rely on the strength of the cloth (see Non-patent Document 1). Such tents, zelts or tarps are required to be lightweight and compact, and to have durability in environments in which they are used, such as light resistance and water resistance, due to the situations in which they are used. When the tents, zelts and tarps are used, tension must be applied to predetermined areas of the cloth so as to form a roof part and wall parts, and therefore a predetermined tensile strength is required for the cloth (see Patent Document 1 as an example of a trap).

It is difficult, however, to satisfy all of the requirements for the cloth for these tents, zelts or tarps. In other words, if a weight per unit length of the cloth is increased, a tensile strength can be improved, but the cloth is heavy and bulky, and thus the requirements of lightness in weight and compactness cannot be satisfied. On the other hand, if a weight per unit length of the cloth is decreased in order to satisfy the requirements of lightness in weight and compactness, a tensile strength is reduced, and thus the cloth cannot withstand the applications.

For that reason, parts to which tension is applied are stitched with a different tape cloth and doubled, so as to be lightweight and compact, and have a tensile strength satisfied to some extent. Although tapes made of a nylon or polyester cloth have hitherto been used as the different tape, both of them have a large elongation and an insufficient tensile strength, and, problematically, become heavy and bulky if it is intended to ensure the tensile strength. In addition, when the nylon tape is used, a water-repellent treatment is required, because the tape is elongated, and the strength is markedly reduced after being wet. Even when parts to which tension is applied are constituted by putting a margin to seam of a cloth on another margin to seam and sewing these margins with stitching, the tensile strength of the cloth itself is not increased, which is insufficient. Also, a conventional tape cloth is sandwiched between margins to seam (overlapped seam, rolled seam, or the like) of cloth, and is sewn with stitching, but, in this case, if the lightness in weight is satisfied, then the tensile strength is insufficient. In addition, the conventional tape cloths are plain weave tapes having dense lattices and no stretch stiffness. If they are sewn with stitching, puckering (shrinkage by sewing) occurs, which is a cause of quality degradation. Therefore, improvements are required.

In the zelt shown in Non-patent Document 1, a rope made of a high-strength polyethylene (a trade name "Dyneema (registered trademark)") is inserted into several guides placed on parts to which tension is applied of a backing cloth, and is threaded into the backing cloth. In such a case, though the tensile strength in the direction of tension is high, the tensile strength in a direction perpendicular to the direction of tension relies on the strength of the cloth itself because the rope is not sewn throughout the cloth, which lacks balance. Therefore, improvements are required. As the sewing of guides and rope-sewing are highly difficult and thus the working is carefully performed in order to maintain product quality; as a result, it is necessary to improve the production cost as well.

### Prior Art Documents

### Patent Document

Patent Document 1: JP-A-2008-57273

### Non-patent Document

Non-Patent Document 1: introduction pages of zelt in home page of Finetrack Co., Ltd., [online], [searched on January 23, 2009], Internet <URL:http://www.finetrack.com/product/detail_FAG0102.html>

Document US 4 405 669 discloses a laminate reinforcement for fiber-reinforced synthetic resins. This laminate reinforcement comprises high-strength fibers, namely aramid and carbon fibers, which are highly resistant and high elasticity modulus fibers. Thus, this laminate is suitable for extremely heavy-duty, yet light-weight and indent-resistant floating bodies.

A webbing for use in seat belts and the like is known from patent application US 3 756 288 A. This webbing has a first warp of yarn of medium strength high tensility and has a second and third warp of yarn of low strength low tensility, medium strength medium tensility, or high strength low tensility as compared with the strength and tensility of the first warp. The weft is yarn of medium strength and high tensility.

### Summary of the Invention

### Problems to be Solved by the Invention

In view of the problems described above, the present invention has been made, and aims at providing a lightweight, compact reinforcing tape capable of improving a tensile strength, a cloth produced by sewing the reinforcing tape, a tent, a zelt and a tarp using the cloth, and a web structure constituted using the reinforcing tape.

### Means for Solving the Problem

The invention is directed to a reinforcing tape according to claim 1 for reinforcing a tensile strength of a cloth.

According to such a structure, a tensile strength in the warp thread direction (the longitudinal direction of the tape) can be significantly improved because the high-strength fiber is used as a part of the warp threads in the reinforcing tape.

Also, a part of the weft threads constituting the weave structure of the reinforcing tape can be made of the high-strength fiber. According to such a structure, because the high-strength fiber is used as a part of the weft threads of the reinforcing tape, a tensile strength in the part (the width direction of the tape) can be significantly improved. For example, when the part made of the weft threads of the high-strength fiber is sewn to a cloth, a tensile strength in the weft thread direction can be significantly improved and thus breaking or tearing of the cloth caused by tension can be effectively suppressed.

The high-strength fiber as a part of the warp threads is placed at a center section in the width direction of the reinforcing tape, and a structure in which the part made of the high-strength fiber and a part made of other warp thread fiber are alternately placed is also disclosed. This high-strength fiber may be either a monofilament or a multifilament. The multifilament is preferable in terms of the flexibility. The high-strength fiber may be made into a composite textured yarn with various materials such as cotton, Es and nylon.

The high-strength fiber, which constitutes a part of the weft threads, may be partially woven into the reinforcing tape and may be distributed into multiple sections. This high-strength fiber may be either a monofilament or a multifilament. The multifilament is preferable in terms of the flexibility. The high-strength fiber may be made into a composite textured yarn with various materials such as cotton, Es and nylon. In usual, the end of the weft thread may be connected to the end of the high-strength fiber by means of bonding in which the thread end is tied to the fiber end, heat adhesion, melt adhesion, adhesive-bonding, or a bonding in which the thread and the fiber are twined to each other.

The high-strength fiber is preferably made of a fiber which is lightweight and is not bulky and has a high tensile strength. With respect to the lightness in weight of the high-strength fiber, a specific gravity is preferably 1.8 or less, more preferably 0.99 or less, further more preferably 0.97 or less. The high-strength fiber has a density of 1.8 g/cm3 or less, more preferably 0.99 g/cm3 or less, further more preferably 0.97 g/cm3 or less. The high-strength fiber preferably has a tensile strength of 20 cN/dtex or more, more preferably 26 cN/dtex or more. The high-strength fiber preferably has a modulus of elasticity of 400 cN/dtex or more, more preferably 750 cN/dtex or more. With respect to the physical properties of the fiber, using a "Tensilon" manufactured by Orientec Co., Ltd., under conditions of a sample length of 200 mm and an elongation rate of 50%/minute, a stress-strain curve is measured at an ambient temperature of 20°C under a relative humidity of 65%, and the tensile strength (cN/dtex) and an elongation at break (%) are obtained by calculation from a stress and an elongation at a breaking point. Also the modulus of elasticity (cN/dtex) is obtained by calculation from a tangential line giving a maximum incline around the origin of the curve. The mean of 10 measurements is used as each value. When fineness is measured, an about two-meter single yarn is taken out, one meter thereof is weighed, and the obtained weight is converted into 10000 m weight, which is expressed as the fineness (dtex). The high-strength fiber has, preferably, an excellent wear resistance, an excellent resistance to fatigue from flexing and an excellent light resistance, in view of the outdoor environment in which it is used and the portability for emergency use.

Examples of the high-strength fiber may include polyethylene fibers, aramid fibers, carbon fibers, polyacrylate fibers, and poly-p-phenylene benzobisoxazole (PBO) fibers. Examples of the polyethylene fiber may include Dyneema (registered trademark) SK 60 or SK 71, which is an ultrahigh molecular weight polyethylene fiber. The aramid fiber is made of an aromatic polyamide having a linear molecular structure, and may include, for example, Kevlar (registered trademark) and Nomex (registered trademark). The carbon fiber is a fiber produced by carbonizing an acrylic fiber or pitch (a by-product in production of petroleum, coal or coal tar) as a raw material at a high temperature, and may include, for example, Torayca (registered trademark). Examples of the polyacrylate fiber may include Vectran (registered trademark). Examples of the PBO fiber may include Zylon (registered trademark). The high-strength fiber, which is used as a part of the warp threads, can be made of a single fiber or a combination of multiple fibers selected from the group consisting of the above-mentioned polyethylene fibers, aramid fibers, carbon fibers, polyacrylate fibers and PBO fibers.

A weaving method is not particularly limited, and a plain weave may be exemplified, in terms of the strength.

The weft thread and the warp thread, which constitute the weave structure of the reinforcing tape, are not particularly limited, and examples thereof may include polyamide fibers (such as nylon), polyester fibers (such as ester fibers), rayon fibers, polyester fibers, and polyacrylonitrile fibers. The weft thread and the warp thread may be a monofilament or a multifilament. Also, each of the weft thread and the warp thread may be made of different kinds of fibers or the same kind of fiber.

In the present invention, the weft thread and the warp thread are preferably a monofilament made of any fiber material selected from the group consisting of rayon fibers, polyamide fibers, polyester fibers and acrylic fibers. A reinforcing tape having a plain weave structure of monofilament weft threads and warp threads has body and is lightweight and compact, and puckering can be prevented when the tape is sewn to a cloth. The polyester monofilament is particularly preferable as the weft thread and the warp thread, in terms of the lightness in weight, the compactness, the high durability, the low water absorbability and the low elongation. The monofilament preferably has a loop strength, measured in accordance with JIS L 1013, of 3.0 cN/dtex or more, more preferably 5.0 cN/dtex or more, and preferably has a tensile strength, measured in accordance with JIS L 1013, of 1.5 cN/dtex or more, more preferably 2.0 cN/dtex or more. The monofilament preferably has a diameter or a section size of 0.05 mm to 1.0 mm, more preferably 0.05 mm to 0.15 mm, in terms of the lightness in weight, the compactness and the strength. The cross-sectional shape thereof is not particularly limited and is preferably a round shape.

In the present invention, coarse lattices (holes) are provided on the plain weave structure, and the high-strength fiber is placed at the center section toward the width direction of the reinforcing tape. Such a structure can make the reinforcing tape be appropriately sewn (for example, sewing with stitching) to a cloth using the lattices at the ends in the width direction, while the high-strength fiber does not interfere with the sewing. In a case where the high-strength fiber has a low frictional property, the high-strength fiber is placed for weaving at the center section in the width direction of the reinforcing tape, as described above, and thus weaving can be easily performed. The coarse lattices of the plain weave structure have an aperture of 0.1 mm or more and 2 mm or less, more preferably 0.1 mm or more and 1 mm or less, in terms of the strength, the lightness in weight, and the easiness of sewing with stitching.

Another aspect of the present invention is a cloth produced by sewing the reinforcing tape, as described above. The cloth is not particularly limited, and may be made of a polyester fiber, a nylon fiber, a rayon fiber or a composite textured fiber thereof. When the cloth is used as a zelt for emergency, and the like, the lightness in weight and the compactness are particularly required, and thus a nylon fiber is preferable. A sewn site in which the reinforcing tape is sewn to the cloth is not particularly limited, and the reinforcing tape is preferably sewn to, for example, positions to which tension is applied. The sewn site is not particularly limited, and may be the backing cloth of the cloth, and the reinforcing tape may also be sewn to margins to seam in which two cloth panels are overlapped and sewn.

In the present invention described above, a structure in which the reinforcing tape is sewn with stitching to the margin to seam in the sewn site is preferable. Examples of the margin to seam may include an overlapped seam and a rolled seam. It is preferable that the reinforcing tape is back stitched with stitching to the cloth in each of both ends in the width direction of the plain weave structure of the reinforcing tape. The thread for sewing is not particularly limited but is required to be lightweight and high in strength.

In the present invention as described above, there is a structure in which loop sections to be sewn to each of both ends in the longitudinal direction of the reinforcing tape are provided on the cloth. In order to apply tension to the cloth, loop sections are provided on the cloth. This loop section is constituted by a member having a tensile strength, such as a plastic, a synthetic fiber, a natural fiber, a synthetic leather, or a natural leather. Its shape may be ring-shaped or hook-shaped, and may be constituted by a ring tape, a string or a rope. When the loop sections and the both ends in the longitudinal direction of the reinforcing tape are directly sewn, even if tension is applied to the loop sections, the elongation of the cloth can be appropriately suppressed because the tensile strength is significantly improved by the reinforcing tape. The loop sections may also be constituted by the reinforcing tape. For example, the reinforcing tape is elongated outward from the end of the cloth, is rewound in a ring shape, and is sewn to the cloth.

When the reinforcing tape, or the cloth produced by sewing the reinforcing tape is sewn to sites, in which a tensile strength is required, of a zelt, a tarp or a tent, a lightweight zelt, tarp or tent having a sufficient tensile strength can be appropriately constituted.

Another aspect of the present invention is a web structure which is constituted using the reinforcing tape made of the weft threads which constitute the weave structure of the tape, and the warp threads which constitute the weave structure of the tape, wherein a part of the warp threads is made of the high-strength fiber. Further, another embodiment is a web structure which is constituted using the reinforcing tape in which a part of the warp threads and a part of the weft threads are made of the high-strength fiber. The high-strength fiber which makes a part of the weft threads is located in intersections of the web structure to form the intersections, and therefore sufficient tensile strength can be secured in the width (horizontal) direction and the longitudinal (vertical) direction of the reinforcing tape.

This web structure may be formed into a pouch, a sack, a bag, or the like. When the web structure is sewn to a backing cloth of a cloth, lightweight bags having a remarkably improved cloth strength can be constituted. Also, when the web structure is formed into a hammock shape, a lightweight, compact hammock can be formed. The web structure may be formed into a backpack or may be sewn to sites in which a tensile strength is required.

### Brief Description of Drawings

Fig. 1 is a view showing an example of a reinforcing tape.
Fig. 2 is a view showing an example of a zelt to which a reinforcing tape is sewn.
Fig. 3 is a view showing an example of a zelt to which a reinforcing tape is sewn.
Fig. 4 is a view for explanation of a tensile test method.
Fig. 5 is a view showing a front picture of a cloth broken in a tensile test.
Fig. 6 is a view showing an example of a web structure.

Mode for Carrying Out the Invention

### (Reinforcing Tape)

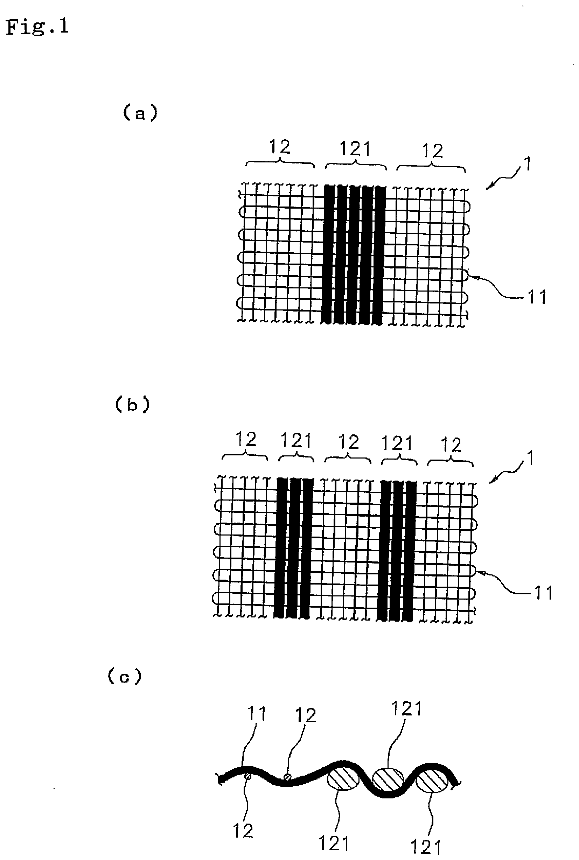

Next, the reinforcing tape of the present invention will be explained in detail. Fig. 1 is a view showing a structure example of a reinforcing tape 1. The reinforcing tape 1 has a plain weave structure. Weft threads 11 and warp threads 12 are made of a polyester monofilament. The polyester monofilament of the weft threads 11 and the warp threads 12 has a circular cross-sectional shape, and has a diameter of about 0.15 mm. The polyester monofilament has a loop strength, measured in accordance with JIS L 1013, of 3.0 cN/dtex, and a tensile strength, measured in accordance with JIS L 1013, of 1.5 cN/dtex or more. Warp threads 121 are made of a multifilament of an ultrahigh molecular weight polyethylene fiber, Dyneema (registered trademark) SK 60. In Fig. 1 (a), the five warp threads 121 are woven at the center in the width direction. Fig. 1 (c) is a schematic view of a part (including high-strength fiber 121) of the plain weave structure, which is observed from the side in the width direction.

The reinforcing tape 1 shown in Fig. 1 (a) has a thickness of about 0.3 mm, a tape width of 10 mm and a weight per unit length of 1.16 g/m. The reinforcing tape 1 has an average tensile strength (breaking strength) of 537 N (n=3), measured using a 20 kN universal testing machine under test conditions of a tension rate of 100 mm/minute, a range of 1000 N, an initial tension of 0 N, and a gauge length of 100 mm. An average elongation percentage of the reinforcing tape 1 to the tensile strengths 100 N, 200 N and 300 N are, respectively, 4.3%, 7.3% and 10% (n=3). The test results are shown in Table 1.

**[Table 1]**

| | N:1 | N:2 | N:3 | Average (N:1-3) |
|---|---|---|---|---|
| 100 N | elongation percentage 5% | elongation percentage 4% | elongation percentage 4% | elongation percentage 4.3% |
| 200 N | elongation percentage 7% | elongation percentage 8% | elongation percentage 7% | elongation percentage 7.3% |
| 300 N | elongation percentage 10% | elongation percentage 11% | elongation percentage 9% | elongation percentage 10.0% |
| breaking strength | 566 N | 513 N | 532 N | 537 N |

Since the reinforcing tape 1 described above is lightweight and compact, and has a high tensile strength, the reinforcing tape 1 can be sewn to parts to which tension is applied and the sewn parts of the cloth to effectively reinforce the tensile strengths of those parts in the vertical direction. Also, because the reinforcing tape 1 has the plain weave structure made of the monofilaments, it has stretch stiffness; because the tape is easily sewn to the cloth, the puckering (shrinkage by sewing) does not occur, and the product quality (appearance and the like) is excellent; and because sewing working is easily performed, a high yield can be obtained, a sewing speed can be fast, and a production cost can be kept low.

### (Another Structure Example of High-Strength Fiber)

Although, in the tape described above, the ultrahigh molecular weight polyethylene fiber, Dyneema (registered trademark) SK 60 is used as the high-strength fiber of the warp thread 121, Dyneema (registered trademark) SK 71 may be used, and an aramid fiber, a carbon fiber, a polyacrylate fiber or a PBO fiber having a tensile strength of 20 cN/dtex or more may also be used.

### (Another Structure Example of Weave Structure)

Although, in the tape described above, the explanation of the plain weave structure is made as the weave structure, the weave structure is not particularly limited thereto, and it may be a diagonal weave structure or a herringbone weave structure.

### (Another Embodiment)

Although, as the reinforcing tape described above, an example in which the high-strength fiber is used as a part of the warp threads is explained, the tape is not limited thereto, and a structure in which the high-strength fiber is woven into a part of the weft threads of the reinforcing tape may also be constituted.

### (Zelt)

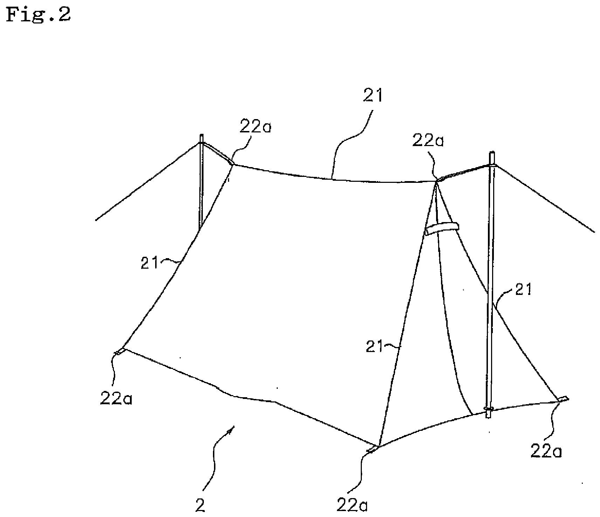

An example in which the reinforcing tape 1 is sewn to a zelt will be explained using Fig. 2 below. A cloth for a zelt 2 is required to be lightness in weight and compactness because the zelt 2 is carried for emergency. The cloth for the zelt 2 is made of Nylon (registered trademark) 66, and a water-proof breathable coating is applied to the cloth. When the zelt 2 is set up, ridge lines 21 are formed by applying tension to loop sections 22a so that a roof and wall parts of the zelt 2 are formed. The reinforcing tape 1 is sewn to these ridge lines 21. The reinforcing tape 1 is also sewn to other sewn parts to which tension is applied, but is not shown in the figure.

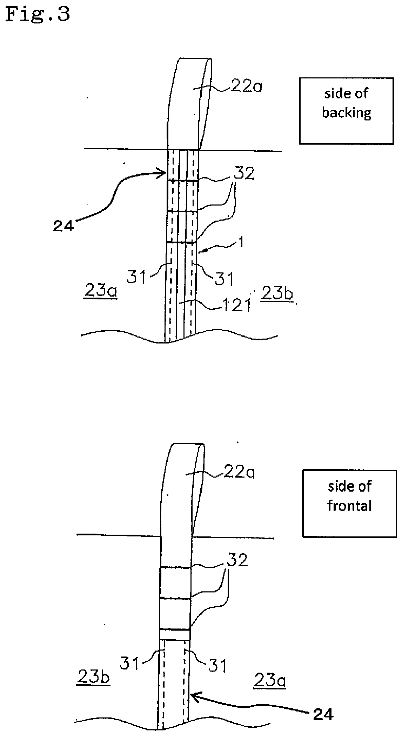

A partial enlarged view of the ridge line 21 of the zelt 2 to which the reinforcing tape 1 is sewn is shown in Fig. 3. In the zelt 2 shown in Fig. 3, two cloths 23a and 23b are rolled and sewn in a margin to seam 24. Further, the reinforcing tape 1 is back stitched to this margin to seam 24 with stitches 31. A loop section 22a is back stitched 32 to the reinforcing tape 1 and the margin to seam 24. When the stitches are sewn, two stitch lines 31 can be sewn once because the reinforcing tape 1 itself has stretch stiffness, and therefore the workability is good. Also, because puckering (shrinkage by sewing) does not occur, the appearance quality is good, and because the stitching can be uniformly finished, the seam strength is stable in all sites.

Nylon 66, which is a material of the zelt 2, absorbs moisture and water in nature, and thus it swells and its strength is decreased, but when the ridge lines 21 to which tension is applied are reinforced by the reinforcing tapes 1, the zelt 2 can be set up without worrying about the decrease of the tensile strength of the cloth, and particularly it is suitable as a zelt 2 for emergency, which is used in a storm. In addition, because the tension in the vertical direction (ridge line direction) can be certainly and firmly functioned by the reinforcing tape 1, bending does not occur even if the whole zelt 2 swells, and cloth break due to wind can be remarkably decreased.

### (Examples and Comparative Examples)

The tensile strength tests (breaking strength) of two kinds of samples, a zelt 2 having the reinforcing tape 1 and a zelt 2 having no reinforcing tape were performed. The sample having no reinforcing tape is formed by rolled seam of two cloths with stitching. The test environmental conditions were: (1) normal conditions (a sample which is humidified at a temperature of 20°C under a humidity of 65% RH is tested), and (2) high humidity conditions (a sample is humidified at a temperature of 40°C under a humidity of 90% over day and night, and then immediately the test is performed at 20°C under a humidity of 65% RH).

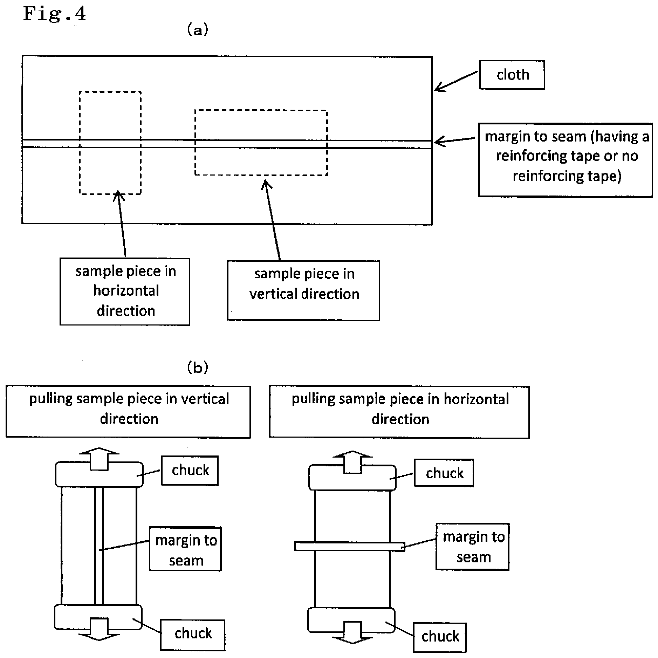

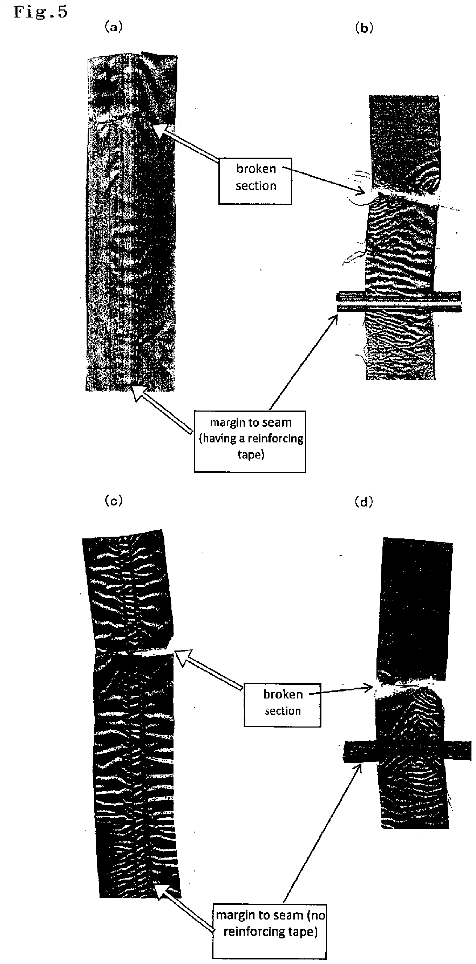

Fig. 4 shows the tensile test method. Fig. 4 (a) shows a method for sampling a sample piece in the vertical direction and a sample piece in the horizontal direction. Each sample piece has a length in the longitudinal direction of 20 cm and a length in the width direction of 5 cm. As shown in Fig. 4 (b), a margin to seam (having a reinforcing tape or having no reinforcing tape) of the sample piece in the horizontal direction remains so that the margin sticks out from the edge in the width direction of the sample about 2 cm. As shown in Fig. 4 (b), the tensile strength test was performed using wave chucks under test conditions of a tension rate of 100 mm/minute and a length of the sample between grips of 150 mm. The results are shown in Table 2 and Fig. 5 (the results obtained in the normal conditions). Figs. 5 (a) and (b) show states of breaking of the samples having the reinforcing tape, and Figs. 5 (c) and (d) show states of breaking of the samples having no reinforcing tape. Fig. 5 (a), which shows the sample piece in the vertical direction (having the reinforcing tape), shows a state in which the cloth is broken because the warp threads (Dyneema (registered trademark)) in the reinforcing tape are misaligned in the chucked part. Fig. 5 (b), which shows the sample piece in the horizontal direction (having the reinforcing tape), shows a state in which the cloth is broken at the chucked part. Fig. 5 (c), which shows the sample piece in the vertical direction (having no reinforcing tape), shows a state in which the cloth is broken. Fig. 5 (d), which shows the sample piece in the horizontal direction (having no reinforcing tape), shows a state in which the cloth is broken at the chucked part.

**[Table 2]**

| | | reinforcement by reinforcing tape (N) | no reinforcement (N) | reinforcement ÷ no reinforcement × 100(%) |
|---|---|---|---|---|
| normal conditions | vertical direction | 688.5 N | 249.8 N | 275.6% |
| | horizontal direction | 239.2 N | 214.6 N | 111.5% |
| high humidity conditions | vertical direction | 672.2 N | 198.7 N | 338.3% |
| | horizontal direction | 210.3 N | 200.4 N | 104.9% |

In the results in Table 2, the tensile strengths (N) are expressed as the breaking strength of the cloth. When there was reinforcement by the reinforcing tape 1, the result in which the cloth itself had been broken prior to breaking of the reinforcing tape 1 was obtained, which meant the result in which the cloth strength could be significantly reinforced by the reinforcing tape. Comparing the sample "having the reinforcement" with the sample "having no reinforcement" under the normal conditions, it was confirmed that the sample "having the reinforcement" was not less than 2.5 times stronger than the sample having no reinforcement in the vertical direction. Also, because the cloth was broken in the sample in the horizontal direction before the tensile load was applied to the reinforcing tape 1, it seemed that there was little predominance of the sample "having the reinforcement" over the sample "having no reinforcement".

Comparing the case of the high humidity conditions with the case of the normal conditions, the sample "having no reinforcement" showed not less than 20% decrease in strength in the vertical direction, whereas the sample "having the reinforcement" showed not more than 3% decrease in strength in the vertical direction. It is considered that the cloth of the zelt 2 absorbed moisture and water to swell, which leaded to decrease in strength. That is, it was confirmed that the predominance in the strength of the sample "having the reinforcement" was further greater than the sample "having no reinforcement" in the high humidity conditions. The zelt "having the reinforcement", therefore, is not likely to be broken even under strong wind of bad weather, compared to the zelt "having no reinforcement".

The results in Examples and Comparative Examples demonstrated the followings. The zelt having the reinforcement has clearly predominance in the strength in the vertical direction, and because the zelt can be firmly strained in the vertical direction when it is set up under a storm, the whole zelt is not bent even if it swells, and the breaking of the cloth due to wind can be remarkably decreased. The predominance in the strength is not really confirmed in the horizontal direction for a thin cloth currently used. It can be assumed, however, that for a heavy, strong cloth such as one for a tent, there occurs a difference in the breaking strength between the tent "having the reinforcement" and the tent "having no reinforcement", if the cloth is kept until a strength in which a load reaches to a tape. The strength in the vertical direction, therefore, is important, and the strength in the horizontal direction is not necessary to be as high as the strength in the vertical direction, because the force in the horizontal direction is applied to the whole cloth. That is, the properties of the reinforcing tape 1 in this embodiment can be sufficiently exhibited, and the tape can be suitably applied to zelts, tents, and the like.

### (Another Structure Example of Zelt)

In the zelt 2 described above, Nylon (registered trademark) 66 was used as a cloth, but the zelt can be made of another cloth of a fiber such as polyester fiber. In addition, the reinforcing tape 1 can be sewn to a cloth other than the zelt to significantly improve the tensile strength of the cloth.

In the zelt described above, the two cloths were sewn with each other on the ridge line 21, but the zelt may be made by using one cloth. The reinforcing tape 1 may be sewn to all of other parts of the zelt 2 to which tension is applied, or some parts selected therefrom.

In the embodiment described above, the structure example in which the reinforcing tape is sewn to the zelt cloth has been explained, but the present invention is not particularly limited thereto, and the reinforcing tape can be sewn to any site which requires tensile strength of any cloth, such as a tent or a tarp.

### (Web Structure)

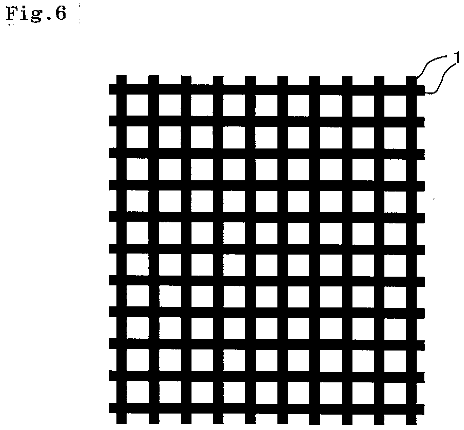

Fig. 6 shows one example of a web structure constituted by the above-mentioned reinforcing tapes 1. The web structure shown in Fig. 6 is a structure in which the reinforce tapes are orthogonally placed in the vertical direction and in the horizontal direction. The tapes may be sewn or bonded with strings at intersection points, or the web structure may have a plain weave structure. The openings in the web structure are not particularly limited, and the size thereof can be determined depending on the use thereof. The appearance of the web structure is not limited to that shown in Fig. 6, and the openings of the web structure may be in the shape of a diamond shape of a parallelogram, a polygon shape, or a cobweb. The size of the openings may not be uniform. This web structure can be applied to a hammock. The web structure has a high tensile strength in the longitudinal direction, and is lightweight and compact, it is thus suitable for a hammock for emergency. The web structure can be formed into a bag, which can be applied to a handbag or an accessory pouch. This web structure can be formed into a backpack or can be sewn to a part of a backpack.

### Explanation of Numerals

1: reinforcing tape
2: zelt
11: weft thread
12: warp thread
121: high-strength fiber
21: ridge line
22a: loop section
24: margin to seam
31: stitch

## Claims

1. A reinforcing tape (1) for reinforcing a tensile strength of a cloth comprising: weft threads (11) which constitute a weave structure of the reinforcing tape (1), and warp threads (12, 121) which constitute a weave structure of the reinforcing tape (1), **characterized in that** the warp threads (12, 121) consist of certain warp yarn consisting of fibers (12), and other warp yarn consisting of high-strength fiber (121), the fiber (12) are made of polyamide fibers, polyester fibers, rayon fibers or polyacrylonitrile fibers; and the high-strength fiber (121) are made of a single fiber or a combination of multiple fibers selected from the group consisting of polyethylene fibers, aramid fibers, polyacrylate fibers and PBO fibers; wherein the weave structure is constituted by a plain weave structure comprising coarse lattices having an aperture of 0.1 mm or more and 2 mm or less, and the warp threads (12, 121) made of high-strength fiber (121) is placed at a center section in the width direction of the reinforcing tape (1).

2. The reinforcing tape (1) according to claim 1, wherein the coarse lattices of the plain weave structure have an aperture of 0.1 mm or more and 1 mm or less.

3. The reinforcing tape (1) according to claim 1, wherein the weft threads (11) consist of certain weft yarn consisting of fibers, and other weft yarn consisting of high-strength fiber, the fibers are made of polyamide fibers, polyester fibers, rayon fibers or polyacrylonitrile fibers,
the high-strength fibers are made of a single fiber or a combination of multiple fibers selected from the group consisting of polyethylene fibers, aramid fibers, polyacrylate fibers and PBO fibers.

4. The reinforcing tape (1) according to any one of claim 1 to 3, wherein the weft threads (11) and the warp threads (12) which constitute the weave structure of the reinforcing tape (1) are monofilaments, wherein the weft threads (11) are made of any one fiber material selected from the group consisting of rayon fibers, polyamide fibers, polyester fibers, and acrylic fibers.

5. A cloth comprising the reinforcing tape according to any one of claims 1 to 4.

6. The cloth according to claim 5, which has a loop section which is sewn to each of both ends in the longitudinal direction of the reinforcing tape.

7. A tarp using the cloth according to claim 5 produced by sewing the reinforcing tape.

8. A tent using the cloth according to claim 5 produced by sewing the reinforcing tape.

9. A web structure containing a reinforcing tape (1) according to claim 1, **characterized in that** the web structure is a structure in which the reinforcing tape (1) is orthogonally placed in the vertical direction and in the horizontal direction.

10. The reinforcing tape (1) according to any one of claim 1 to 4, **characterized in that** the high-strength fiber (121) has a tensile strength of 20 cN/dtex or more.

11. The reinforcing tape (1) according to any one of claim 1 to 4, wherein the high-strength fiber (121) has a density of 1.8 g/cm³ or less.

12. The reinforcing tape (1) according to any one of claim 1 to 4, wherein the high-strength fiber (121) has a density of 0.99 g/cm³ or less.

13. The reinforcing tape (1) according to any one of claim 1 to 4, wherein the high-strength fiber (121) has a modulus of elasticity of 400 cN/dtex or more.

14. The reinforcing tape (1) according to any one of claim 1 to 4, wherein the high-strength fiber (121) has a modulus of elasticity of 750 cN/dtex or more.

15. The reinforcing tape (1) according to any one of claim 1 to 4, wherein a specific gravity of the high-strength fiber (121) is 1.8 or less.

16. The reinforcing tape (1) according to any one of claim 1 to 4, wherein a specific gravity of the high-strength fiber (121) is 0.99 or less.

## Patentansprüche

1. Verstärkungsband (1) zum Verstärken einer Zugfestigkeit eines Stoffes, umfassend: Schussfäden (11), welche eine Gewebestruktur des Verstärkungsbandes (1) bilden, und Kettfäden (12, 121), welche eine Gewebestruktur des Verstärkungsbandes (1) bilden, **dadurch gekennzeichnet, dass** die Kettfäden (12, 121) aus bestimmtem Kettgarn, bestehend aus Fasern (12), und anderem Kettgarn, bestehend aus hochfester Faser (121), bestehen, wobei die Faser (12) aus Polyamid-Fasern, Polyester-Fasern, Kunstseide-Fasern oder Polyacrylnitril-Fasern bestehen; und wobei die hochfeste Faser (121) aus einer einzelnen Faser oder einer Kombination von mehreren Fasern, ausgewählt aus der Gruppe umfassend Polyethylen-Fasern, Aramid-Fasern, Polyacrylat-Fasern und PBO-Fasern, besteht;
wobei die Gewebestruktur gebildet wird durch Leinenbindungsstruktur umfassend grobe Gitter mit einer Öffnung von 0,1 mm oder mehr und 2 mm oder weniger, und wobei die Kettfäden (12, 121), welche aus hochfester Faser (121) bestehen, an einem Zentralbereich in der Breitenrichtung des Verstärkungsbands (1) angeordnet sind.

2. Verstärkungsband (1) nach Anspruch 1, wobei die groben Gitter der Leinenbindungsstruktur eine Öffnung von 0,1 mm oder mehr und 1 mm oder weniger aufweisen.

3. Verstärkungsband (1) nach Anspruch 1, wobei die Schussfäden (11) aus einem bestimmten Schussgarn, bestehend aus Fasern, und anderem Schussgarn, bestehend aus hochfester Faser, bestehen, wobei die Fasern aus Polyamid-Fasern, Polyester-Fasern, Kunstseide-Fasern oder Polyacrylnitril-Fasern bestehen, wobei die hochfesten Fasern aus einer einzelnen Faser oder einer Kombination von mehreren Fasern, ausgewählt aus der Gruppe umfassend Polyethylen-Fasern, Aramid-Fasern, Polyacrylat-Fasern und PBO-Fasern, bestehen.

4. Verstärkungsband (1) nach einem der Ansprüche 1 bis 3, wobei die Schussfäden (11) und die Kettfäden (12), welche die Gewebestruktur des Verstärkungsbands (1) bilden, Monofile sind, wobei die Schussfäden (11) aus einem Fasermaterial, ausgewählt aus der Gruppe umfassend Kunstseide-Fasern, Polyamid-Fasern, Polyester-Fasern, und Acryl-Fasern, bestehen.

5. Stoff umfassend das Verstärkungsband nach einem der Ansprüche 1 bis 4.

6. Stoff nach Anspruch 5, welcher einen Schleifenabschnitt aufweist, welcher an jedem der beiden Enden des Verstärkungsbands in longitudinaler Richtung angenäht ist.

7. Plane, welche den mittels Nähen des Verstärkungsbandes hergestellten Stoff nach Anspruch 5 verwendet.

8. Zelt, welches den mittels Nähen des Verstärkungsbandes hergestellten Stoff nach Anspruch 5 verwendet.

9. Webstruktur beinhaltend ein Verstärkungsband (1) nach Anspruch 1, **dadurch gekennzeichnet, dass** die Webstruktur eine Struktur ist, in welcher das Verstärkungsband (1) orthogonal in der vertikalen Richtung und der horizontalen Richtung angeordnet ist.

10. Verstärkungsband (1) nach einem der Ansprüche 1 bis 4, **dadurch gekennzeichnet, dass** die hochfeste Faser (121) eine Zugfestigkeit von 20 cN/dtex oder mehr aufweist.

11. Verstärkungsband (1) nach einem der Ansprüche 1 bis 4, wobei die hochfeste Faser (121) eine Dichte von 1,8 g/cm3 oder weniger aufweist.

12. Verstärkungsband (1) nach einem der Ansprüche 1 bis 4, wobei die hochfeste Faser (121) eine Dichte von 0,99 g/cm3 oder weniger aufweist.

13. Verstärkungsband (1) nach einem der Ansprüche 1 bis 4, wobei die hochfeste Faser (121) einen Elastizitätsmodul von 400 cN/dtex oder mehr aufweist.

14. Verstärkungsband (1) nach einem der Ansprüche 1 bis 4, wobei die hochfeste Faser (121) einen Elastizitätsmodul von 750 cN/dtex oder mehr aufweist.

15. Verstärkungsband (1) nach einem der Ansprüche 1 bis 4, wobei ein spezifisches Gewicht der hochfesten Faser (121) 1,8 oder weniger ist.

16. Verstärkungsband (1) nach einem der Ansprüche 1 bis 4, wobei ein spezifisches Gewicht der hochfesten Faser (121) 0,99 oder weniger ist.

## Revendications

1. Ruban de renforcement (1) pour renforcer une résistance à la traction d'un tissu comprenant : des fils de trame (11) qui constituent une structure de tissage du ruban de renforcement (1), et des fils de chaîne (12, 121) qui constituent une structure de tissage du ruban de renforcement (1), **caractérisé par le fait que** les fils de chaîne (12, 121) consistent en certain fil de chaîne constitués de fibres (12), et en d'autre fil de chaîne constitués de fibre à haute résistance (121), les fibres (12) étant faites de fibres de polyamide, de fibres de polyester, de fibres de rayonne ou de fibres de polyacrylonitrile ; et la fibre à haute résistance (121) est faite d'une unique fibre ou d'une combinaison de multiples fibres choisies parmi le groupe constitué de fibres de polyéthylène, de fibres d'aramide, de fibres de polyacrylate et de fibres de PBO ;
la structure de tissage étant constituée d'une structure d'armure toile comprenant des treillis grossiers ayant une ouverture de 0,1 mm ou plus et de 2 mm ou moins, et les fils de chaîne (12, 121) faits de fibre à haute résistance (121) étant placés au niveau d'une section centrale dans la direction de largeur du ruban de renforcement (1).

2. Ruban de renforcement (1) selon la revendication 1, dans lequel les treillis grossiers de la structure d'armure toile ont une ouverture de 0,1 mm ou plus et de 1 mm ou moins.

3. Ruban de renforcement (1) selon la revendication 1, dans lequel les fils de trame (11) consistent en certain fil de trame constitués de fibres, et en d'autre fil de trame constitués de fibre à haute résistance, les fibres étant faites de fibres de polyamide, de fibres de polyester, de fibres de rayonne ou de fibres de polyacrylonitrile,
les fibres à haute résistance étant faites d'une unique fibre ou d'une combinaison de multiples fibres choisies parmi le groupe constitué de fibres de polyéthylène, de fibres d'aramide, de fibres de polyacrylate et de fibres de PBO.

4. Ruban de renforcement (1) selon l'une quelconque des revendications 1 à 3, dans lequel les fils de trame (11) et les fils de chaîne (12) qui constituent la structure de tissage du ruban de renforcement (1) sont des monofilaments, les fils de trame (11) étant faits de n'importe quelle matière de fibre choisie parmi le groupe constitué de fibres de rayonne, de fibres de polyamide, de fibres de polyester et de fibres acryliques.

5. Tissu comprenant le ruban de renforcement selon l'une quelconque des revendications 1 à 4.

6. Tissu selon la revendication 5, qui a une section de boucle qui est cousue à chacune des deux extrémités dans la direction longitudinale du ruban de renforcement.

7. Bâche utilisant le tissu selon la revendication 5, produite par couture du ruban de renforcement.

8. Tente utilisant le tissu selon la revendication 5, produite par couture du ruban de renforcement.

9. Structure de voile contenant un ruban de renforcement (1) selon la revendication 1, **caractérisée par le fait que** la structure de voile est une structure dans laquelle le ruban de renforcement (1) est placé orthogonalement dans la direction verticale et dans la direction horizontale.

10. Ruban de renforcement (1) selon l'une quelconque des revendications 1 à 4, **caractérisé par le fait que** la fibre à haute résistance (121) a une résistance à la traction de 20 cN/dtex ou plus.

11. Ruban de renforcement (1) selon l'une quelconque des revendications 1 à 4, dans lequel la fibre à haute résistance (121) a une densité de 1,8 g/cm3 ou moins.

12. Ruban de renforcement (1) selon l'une quelconque des revendications 1 à 4, dans lequel la fibre à haute résistance (121) a une densité de 0,99 g/cm3 ou moins.

13. Ruban de renforcement (1) selon l'une quelconque des revendications 1 à 4, dans lequel la fibre à haute résistance (121) a un module d'élasticité de 400 cN/dtex ou plus.

14. Ruban de renforcement (1) selon l'une quelconque des revendications 1 à 4, dans lequel la fibre à haute résistance (121) a un module d'élasticité de 750 cN/dtex ou plus.

15. Ruban de renforcement (1) selon l'une quelconque des revendications 1 à 4, dans lequel une gravité spécifique de la fibre à haute résistance (121) est de 1,8 ou moins.

16. Ruban de renforcement (1) selon l'une quelconque des revendications 1 à 4, dans lequel une gravité spécifique de la fibre à haute résistance (121) est de 0,99 ou moins.
